# EUROPEAN PATENT APPLICATION

(11) **EP 2 345 981 A2**
(43) Date of publication of application: **20.07.2011**
(21) Application number: 11151290.1
(22) Date of filing: 18.01.2011
(51) Int. Cl.: G06K 15/02, H04N 1/387

(54) **Image processing apparatus, image processing method, and storage medium**

(30) Priority: 18.01.2010 JP 2010008044; 25.11.2010 JP 2010262874
(71) Applicant: CANON KABUSHIKI KAISHA, Ohta-ku Tokyo 146-8501 (JP)
(72) Inventor: Ichihashi, Yukichika, Ohta-ku Tokyo (JP)
(74) Representative: Garner, Jonathan Charles Stapleton

(57) **Abstract**

In a recording apparatus in which resolution of a main scan and resolution of a subscan differ, a print character is preferably reproduced. An image processing apparatus for controlling the recording apparatus in which the subscan resolution is lower than the main scan resolution has: a character direction discriminating unit for discriminating a direction of a character included in image data; an image rotating unit for rotating the image data so that a horizontal line in the character decided by the character direction discriminating unit is scanned by the main scan of the recording apparatus; and a control unit for allowing the recording apparatus to record the image data rotated by the image rotating unit.

## Description

### BACKGROUND OF THE INVENTION

### Field of the Invention

The present invention relates to the realization of high picture quality in recording in which resolution of a main scan and resolution of a subscan differ.

### Description of the Related Art

Among recording apparatuses based on an electrophotographic system in the related arts, there is a recording apparatus in which resolution of a main scan and resolution of a subscan differ. In this case, generally, the resolution of the main scan is high and the resolution of the subscan is low.

The resolution of the main scan is determined in dependence on a switching speed of ON/OFF operations of a laser. Such high resolution is attained by the realization of a high speed of a driving circuit of a laser generator and a high speed of a PWM signal generating circuit. The resolution of the subscan is determined in dependence on speeds and the like of a developing apparatus, a conveying apparatus of a recording media, and a fixing apparatus of toner. Those speeds are determined in dependence on a material of the developing apparatus, a material of the conveying apparatus, performance of a motor, and performance of the fixing apparatus. Therefore, the realization of the high speed of the subscan directly results in high costs. In recent years, each recording apparatus (printer) maker has realized the low resolution of the subscan in order to realize a high speed and low costs of the recording apparatus.

Ordinarily, it is necessary to make the resolution of the main scan/subscan of digital image data which is input to the recording apparatus coincide with the resolution of the main scan/subscan of the recording apparatus. That is, it is necessary to input the digital image data having the main scan resolution of 600 dpi and the subscan resolution of 300 dpi to the recording apparatus having the main scan resolution of 600 dpi and the subscan resolution of 300 dpi.

In Japanese Patent Application Laid-Open No. 2001-144931, such a technique that the resolution of the main scan and the resolution of the subscan of the input digital image data are compared and an original image is rotated by 90° in accordance with the resolution of the recording apparatus has been disclosed.

For example, the digital image data having the main scan resolution of 600 dpi and the subscan resolution of 1200 dpi is printed by the recording apparatus having the main scan resolution of 1200 dpi and the subscan resolution of 300 dpi. If the technique of selecting the 90° rotating process is not used, since the digital image data is reduced from 1200 dpi to 300 dpi in the subscanning direction, a 1/4 thinning-out process is necessary. If the technique of selecting the 90° rotating process is used, the main scan and the subscan are reversed by the rotating process. That is, as for the digital image data having the subscan resolution of 1200 dpi, when the original image is rotated by 90°, the resolution in the main scanning direction changes to 1200 dpi. Since the main scan resolution of the recording apparatus is equal to 1200 dpi, the thinning-out process is unnecessary. As for the digital image data having the main scan resolution of 600 dpi, when the original image is rotated by 90°, the subscan resolution of the digital image data changes to 600 dpi. Therefore, a 1/2 thinning-out process for reducing the resolution from 600 dpi to 300 dpi corresponding to the resolution in the subscanning direction of the recording apparatus is executed. That is, a deterioration in resolution of the whole image can be prevented by the rotation.

However, in Japanese Patent Application Laid-Open No. 2001-144931, there is a case where characters or the like in the digital image data cannot be beautifully printed. For example, such a phenomenon occurs in the case where the digital image data is a font such as a Ming-style character or the like having a number of lateral thin lines or a ruled line. If the digital image data having the main scan resolution of 600 dpi and the subscan resolution of 1200 dpi is printed as it is by the recording apparatus having the main scan resolution of 1200 dpi and the subscan resolution of 300 dpi without executing the rotating process, since the digital image data is subjected to a high resolution converting process from 600 dpi to 1200 dpi in the main scanning direction, vertical thin lines are not deteriorated. If the rotating process is executed, the vertical thin lines become the lateral thin lines and are remarkably deteriorated due to the 1/2 thinning-out process of the subscan.

### SUMMARY OF THE INVENTION

It is an object of the invention to provide an image output apparatus which can suppress a deterioration in resolution at the time of an image output in a character original or a diagram original and to provide a program for allowing a computer to execute a process for suppressing a deterioration in resolution of an image at the time of the image output.

In order to achieve the object set forth above, the present invention provides an image processing apparatus according to claim 1.

Further features of the present invention will become apparent from the following description of exemplary embodiments with reference to the attached drawings.

### BRIEF DESCRIPTION OF THE DRAWINGS

FIG. 1 is a diagram illustrating a whole MFP which is used in an embodiment of the invention.

FIG. 2 is a diagram illustrating a construction of a controller of the MFP illustrated in FIG. 1.

FIG. 3 is a flowchart common to embodiments 1 to 3.

FIG. 4 is a flowchart for a character direction discrimination (method using band pass filters) in the embodiment 1.

FIG. 5 is an example of a main scan band pass filter.

FIG. 6 is an example of a subscan band pass filter.

FIG. 7 is a flowchart for a character direction discrimination (method using pixel continuity detections) in the embodiment 1.

FIG. 8 is a user input flowchart for a character direction discrimination in an embodiment 2.

FIG. 9 is an example of a user input display screen in the embodiment 2.

FIG. 10 is a flowchart for a character direction discrimination in an embodiment 3.

FIG. 11 is a diagram for describing an embodiment 4.

FIG. 12 is a flowchart of the embodiment 4.

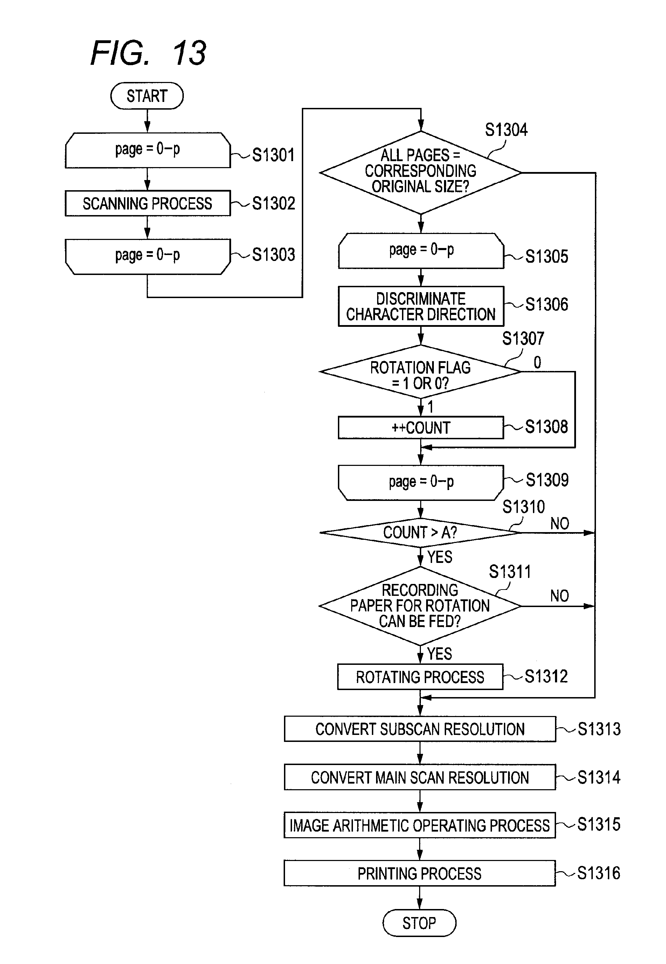

FIG. 13 is a diagram for describing an embodiment 5.

### DESCRIPTION OF THE EMBODIMENTS

Exemplary embodiments of the invention will be described hereinbelow with reference to the drawings. In the following description, it is assumed that "character direction" indicates the vertical direction of one character.

<Embodiment 1>

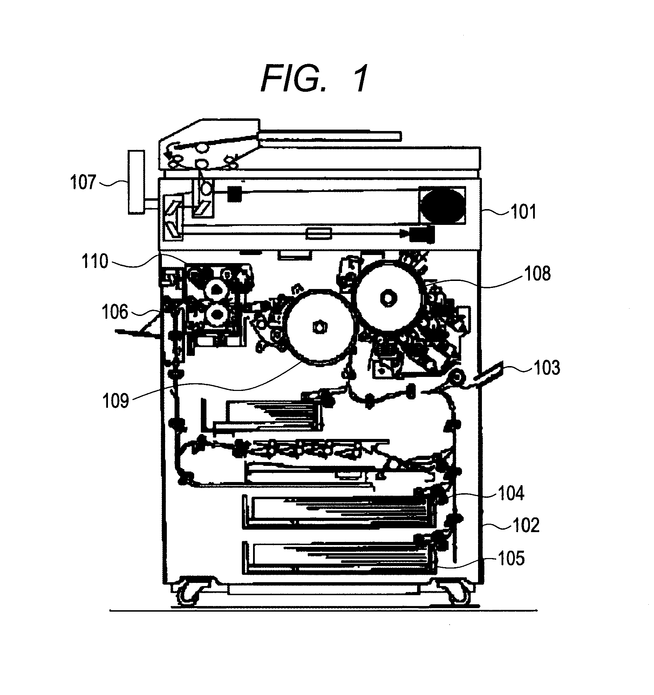

FIG. 1 is a constructional diagram of an MFP (multifunction printer) constructing an embodiment. The MFP is constructed by a scanner unit (101), a recording apparatus (102), a manual sheet insertion port (103), a first sheet cassette (104), a second sheet cassette (105), a sheet discharging unit (106), and an operation panel (107). A controller board is provided for the MFP. The MFP is controlled by the controller board. It is assumed that each of the scanner unit (101) and the recording apparatus (102) copes with originals and recording paper of up to the A3 portrait size. Naturally, each of the manual sheet insertion port (103) and the sheet cassettes (104, 105) also confirms with it. By pulse width modulating image data, an electrostatic latent image according to density of the image data is formed on a photosensitive material 108. By using a transfer material 109, a toner image according to the electrostatic latent image is transferred onto the recording paper fed by the manual sheet insertion port (103) or the sheet cassette (104, 105).

The transferred toner image is fixed onto the recording paper by a fixing device 110, thereby performing printing by an electrophotographic technique.

Although FIG. 1 illustrates the printer of a type using one photosensitive drum, naturally, even a full color printer using four kinds of photosensitive drums and four kinds of lasers in accordance with toner of C, M, Y, and Bk can be used in the following embodiments.

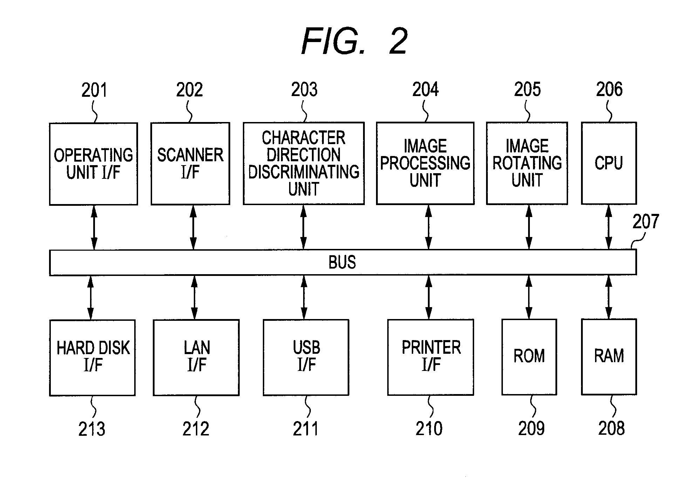

Subsequently, the controller board will be described in detail with reference to FIG. 2. The operation panel (107) and a data bus (207) are connected by an operating unit interface (201). The scanner unit (101) and the data bus (207) are connected by a scanner interface 202. A character direction discriminating unit 203 executes a character direction discriminating process. An image processing unit 204 executes a space filter process, a resolution converting process, or a binarizing process. An image rotating unit 205 executes a rotating process for rotating an original image by 90°, 180°, 270°, or the like. The units 203 to 205 may be realized as hardware or may be installed as programs. A CPU (control unit) 206 executes control of each unit, arithmetic operations to the digital image data, and the like in accordance with programs stored in a ROM (209) . A RAM 208 is used as a storage area for temporarily storing the digital image data, program data, a counter value, and the like. The recording apparatus (102) and the data bus (207) are connected by a printer interface 210. A USB interface 211 and a LAN interface 212 are provided to connect to a personal computer (not shown).

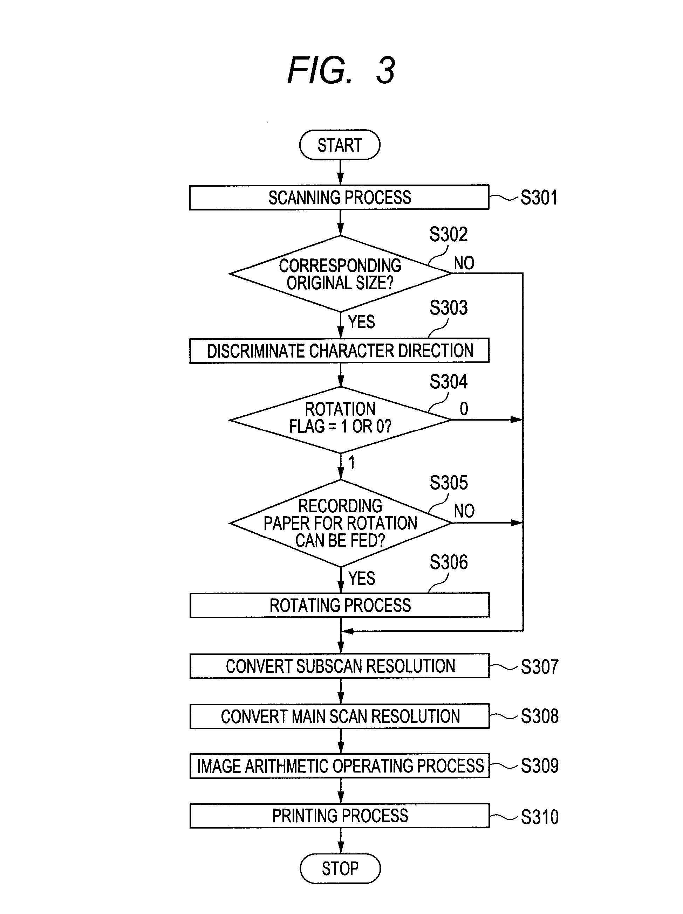

Subsequently, an executing procedure of the embodiment 1 will be described with reference to a flowchart of FIG. 3. When a copy executing command is received by depressing a button on the operation panel (107), the CPU (206) instructs the scanner unit (101) to execute the scanning operation in accordance with the program stored in the ROM (209). The scanner unit (101) reads an original set on a sheet table (not shown) and converts an image of the original into digital image data. Since the digital image data read by the scanner unit (101) is discrete data, it has resolution of the main scan and resolution of the subscan. In the embodiment, a description will be continued on the assumption that the original image has been converted into the digital image data having the main scan resolution of 600 dpi and the subscan resolution of 600 dpi which are the general resolution in the recent electrophotograph MFP. The digital image data transmitted from the scanner unit (101) passes through the data bus (207) and is temporarily stored into the RAM (208).

Although the digital image data is formed by the scanner unit (101) in the embodiment, the invention is not limited to such an example. That is, the digital image data can be also input from the LAN interface (212) or USB interface (211) by a print instruction from a personal computer (not shown). In this case, the transferred digital image data is temporarily stored into the RAM (208) and, thereafter, processed in a manner similar to the case of using the scanner unit (101).

Subsequently, the CPU (206) confirms a size of original in step S302. Generally, information of the original size and a size of digital image data is transmitted from the scanner unit (101) or the personal computer (not shown). The information of the original size can be also obtained by inputting it from the operation panel. At this time, whether or not the obtained size is the corresponding original size in the embodiment is discriminated. In the case of the recording apparatus (102) which can print an image of up to the A3 portrait size, a size of up to the A4 size is the corresponding original size in the embodiment. This is because in the embodiment, since there is a case where the image is rotated by 90° and printed, the recording apparatus (102) which can print the image of up to the A3 portrait size cannot print the image onto a media of the A3 landscape size. If the original is adapted to the corresponding original size, the CPU (206) advances to a process of S303. If it is not adapted to the corresponding original size, the CPU (206) advances to S307.

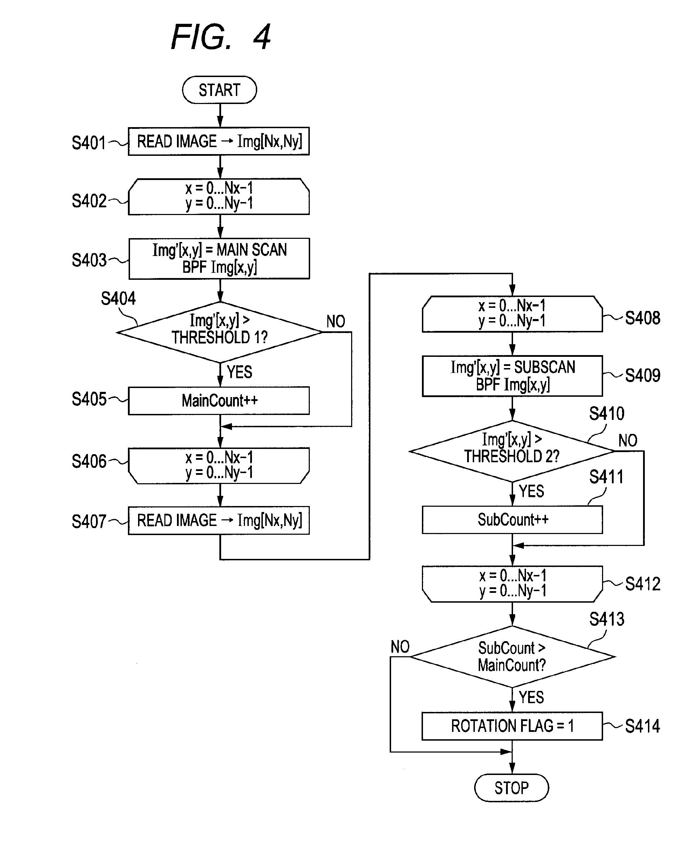

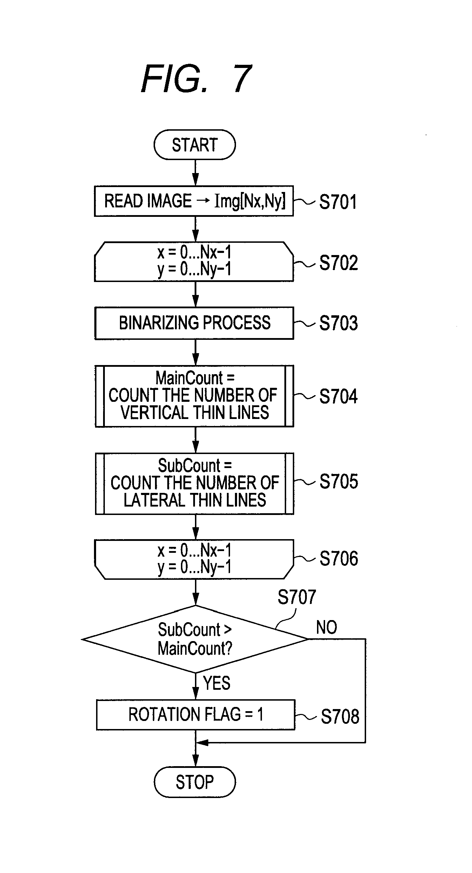

Subsequently, the CPU (206) discriminates the character direction in S303. In this step, whether or not the image is rotated is discriminated and a rotation flag is set to an output value. The CPU (206) transfers the digital image data stored in the RAM (208) to the character direction discriminating unit (203). The character direction discriminating unit (203) executes a process for obtaining the rotation flag. FIGS. 4 and 7 illustrate flowcharts for the processes of the character direction discriminating unit (203). FIG. 4 illustrates a method using band pass filters of the main scan and the subscan. FIG. 7 illustrates a method using pixel continuity detections of the main scan and the subscan. In the embodiment, any one of the methods of FIGS. 4 and 7 may be used.

Method using band pass filters

In S401 in FIG. 4, the digital image data stored in the RAM (208) is read out into an area of an Img memory in the character direction discriminating unit (203). Since the storage area in the RAM (208) is generally shared, the storage area in the character direction discriminating unit (203) is not particularly illustrated. S402 is a loop edge to scan the whole areas of the main scan and the subscan. x denotes a main scanning direction and y indicates a subscanning direction. The number of pixels in the main scan is equal to Nx pixels and the number of pixels in the subscan is equal to Ny pixels.

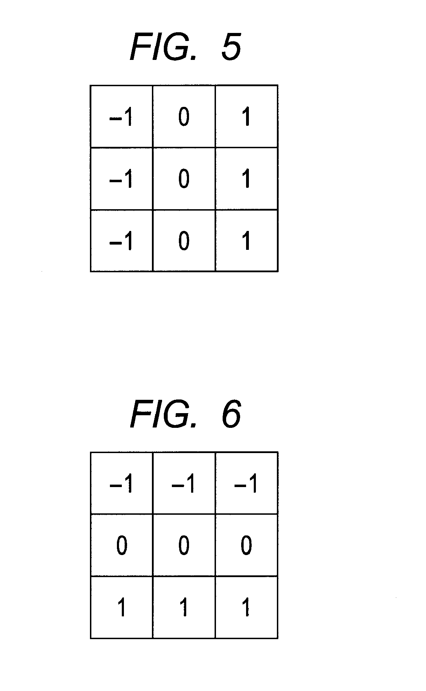

In S403, the character direction discriminating unit (203) executes a band pass filter process every area of (3 x 3 pixels) in order to obtain a feature with respect to the main scanning direction. The filter processed image data is stored into an area Img'. An example of the band pass filter which is used at this time is illustrated in FIG. 5. Assuming that a target pixel is located at the center of the area of (3 x 3 pixels), by executing a product sum arithmetic operation to (3 x 3 pixels) including the target pixel by using coefficients illustrated in FIG. 5, image data after the filter process of the target pixel is obtained. Since a size and a constant of the band pass filter depend on a size and the like of a character to be extracted, they are set to arbitrary values. An arbitrary method such as Sobel operator, Canny's criteria, or the like can be used. Further, if there are a plurality of bands to be extracted, a method of adding filter processed image data to the output (Img') by using a plurality of filters is also considered.

In S404, the character direction discriminating unit (203) compares a value of Img' [x,y] and a threshold value 1. If it is larger than the threshold value 1, a value of MainCount is counted up in S405. The threshold value 1 is an arbitrary value. By adjusting it, the count value of MainCount can be adjusted. If the value of Img' [x,y] is equal to or less than the threshold value 1 in S404, the count value of MainCount is not counted up.

The above operation is executed with respect to the whole area of the digital image data (S406) . Finally, the count value of MainCount is obtained. MainCount is a feature amount of the main scan. That is, it becomes a parameter to evaluate an amount of vertical lines to the whole digital image data.

In S407 to S412, a process for obtaining SubCount (feature amount of the subscan) is executed in correspondence to S401 to S406 as a process for obtaining the feature amount of the main scan mentioned above. However, S409, S410, and S411 are changed to a process for the subscan. An example of a band pass filter of S409 is illustrated in FIG. 6. An arbitrary method such as Sobel operator, Canny's criteria, or the like can be also used here. An obtained count value of SubCount becomes a parameter to evaluate an amount of horizontal lines to the whole digital image data.

In S410, the value of Img'[x,y] and a threshold value 2 are compared. If it is larger than the threshold value 2, the value of SubCount is counted up in S411. The threshold value 2 is an arbitrary value in a manner similar to the threshold value 1. If the value of Img' [x,y] is equal to or less than the threshold value 2 in S410, the count value of SubCount is not counted up.

In S413, the character direction discriminating unit (203) compares SubCount and MainCount. If SubCount is larger than MainCount, the feature amount in the subscanning direction is larger than that in the main scanning direction. That is, it can be determined that in the case of a character portion, an amount of horizontal lines is larger than that of vertical lines. Therefore, "1" is set into the rotation flag in S414. If SubCount is equal to or less than MainCount, the rotation flag is set to "0".

Method using pixel continuity detections

In S701 in FIG. 7, the character direction discriminating unit (203) reads out the digital image data stored in the RAM (208) into the storage area Img in the character direction discriminating unit (203) . Since the storage area in the RAM (208) is generally shared, the storage area in the character direction discriminating unit (203) is not particularly illustrated.

S702 is a loop edge to scan the whole areas of the main scan and the subscan. x denotes the main scanning direction and y indicates the subscanning direction. The number of pixels in the main scan is equal to Nx pixels and the number of pixels in the subscan is equal to Ny pixels.

In 5703, the character direction discriminating unit (203) executes a binarizing process of the image. Although a method of the binarizing process is not designated in particular, it is executed by a simple binary value here. An arbitrary binarization threshold value is prepared. The scanner unit (101) expresses it by luminance information, that is, (white : 255, black : 0). Therefore, if the value is less than the binarization threshold value, it is set to "1" (black), and if it is larger than the binarization threshold value, it is set to "0" (white) so as to be inverted for the luminance information.

In next 5704, the character direction discriminating unit (203) counts the number of vertical lines. As a method of counting the number of vertical thin lines, a location where black continues in the main scanning direction is detected. For example, if the number of continuous black portions in the main scanning direction is equal to or larger than 25 pixels and is equal to or less than 50 pixels (about 1 to 2 mm in the case of 600 dpi), such a region is determined as a vertical line and "1" is added to the count value (MainCount). By executing the above processes in the subscanning direction, the number of vertical lines is counted.

Subsequently, in next S705, the character direction discriminating unit (203) counts the number of horizontal lines. As a method of counting the number of lateral thin lines, a location where black continues in the subscanning direction is detected. For example, if the number of continuous black portions in the subscanning direction is equal to or larger than 25 pixels and is equal to or less than 50 pixels (about 1 to 2 mm in the case of 600 dpi), such a region is determined as a horizontal line and "1" is added to the count value (SubCount). By executing the above processes in the main scanning direction, the number of horizontal lines is counted.

The above operations are executed with respect to the whole region of the digital image data (S706) . Finally, MainCount (feature amount of the main scan) and SubCount (feature amount of the subscan) are obtained.

In S707, the character direction discriminating unit (203) compares a result of the counting of the vertical thin lines (MainCount) and a result of the counting of the lateral thin lines (SubCount) . If the number of horizontal lines is larger than that of the number of vertical lines as a result of the comparison, "1" is set into the rotation flag in S708. That is, it is determined that the number of lateral thin lines is large, and the rotation output is selected. If the number of horizontal lines is equal to or less than the number of vertical lines, the rotation flag is set to "0".

The description of the process of the character direction discriminating unit (203) is finished here and the procedure is returned to the description of FIG. 3. In S304, the CPU (206) discriminates whether or not "1" has been set to the rotation flag. If the rotation flag is equal to 1, the processing routine advances to S305. If the rotation flag is equal to 0, S307 follows.

If the rotation flag is equal to 1 in S304, whether or not the recording paper adapted to the rotating process can be fed is discriminated in S305. If it is decided that the recording paper can be fed, S306 follows. If it is determined that the recording paper cannot be fed, S307 follows.

In S306, the rotating process of 90° is executed. At this time, the character direction discriminating unit (203) uses the image rotating unit (205) in FIG. 2. If the number of horizontal lines is large, by rotating the horizontal lines so as to become the vertical lines, the horizontal lines in the character are scanned by the main scan of the recording apparatus. Thus, since the vertical lines obtained after the rotation are printed by the main scan which is finer than the subscan, the vertical lines after the rotation are difficult to be interrupted.

Subsequently, a resolution converting process of the subscan is executed in S307 and a resolution converting process of the main scan is executed in S308. In the embodiment 1, it is assumed that the recording apparatus (102) having the main scan resolution of 600 dpi and the subscan resolution of 300 dpi is used. As mentioned above, it is assumed that the resolution of the image read out by the scanner unit (101) is equal to 600 dpi in the main scan and 300 dpi in the subscan. Therefore, in S307, the 1/2 thinning-out process is executed in the subscanning direction. Although its executing method is not particularly designated in the embodiment, a linear interpolation arithmetic operation is generally used. Naturally, a nearest neighborhood method or a bicubic method may be used and the order of the resolution conversion and the rotation may be reversed.

Subsequently, in S309, the CPU (206) executes an image arithmetic operating process. The process of S309 can be executed in the image processing unit (204) in FIG. 2. Specifically speaking, a concentration converting process such as a gamma correction or the like, a space filtering process, and a halftone process such as dither, error diffusion, or the like are executed. Since those processes are well-known techniques, their detailed description is omitted here. However, it is assumed that a binary pseudo gradation image was obtained as a result of those processes.

Subsequently, in S310, the CPU (206) executes a printing process. At this time, it is assumed that the recording paper of the A4 landscape size has been set in the first sheet cassette (104) in FIG. 1 and the recording paper of the A4 portrait size has been set in the second sheet cassette (105). For example, when the original read by the scanner unit is the original of the A4 size, if the rotating process of S306 is not performed, the A4 landscape recording paper is fed from the first sheet cassette (104). If the rotating process is executed in S306, the A4 portrait recording paper is fed from the second sheet cassette (105). If the recording paper of the proper size does not exist in the cassette, a message to promote the user to feed the paper from the manual sheet insertion port (103) is displayed on a display screen of the operation panel (107).

According to the foregoing embodiment, in the printed matter which is output by the recording apparatus (102) having the low subscan resolution, the deterioration in resolution of the character or diagram can be automatically suppressed. Owing to the above construction, in the case of Kanji (Chinese character) which needs the resolution of the horizontal lines, such a problem that the horizontal lines are broken or distinguished because of the low subscan resolution can be solved.

<Embodiment 2>

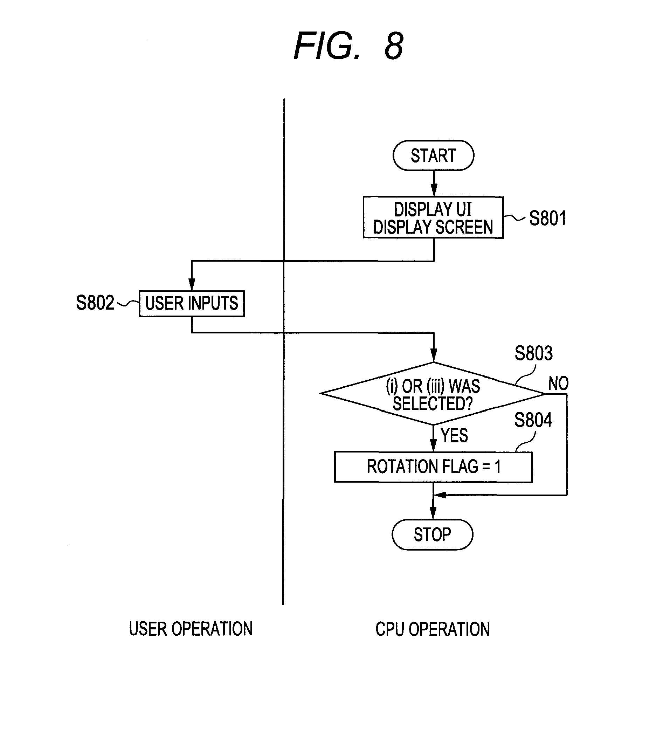

In an embodiment 2, in the character direction discriminating step of S303 in FIG. 3, a display screen is displayed, thereby promoting the user to select and input. A flow for such a process is illustrated in FIG. 8. Since other processes are similar to those in the embodiment 1, their description is omitted.

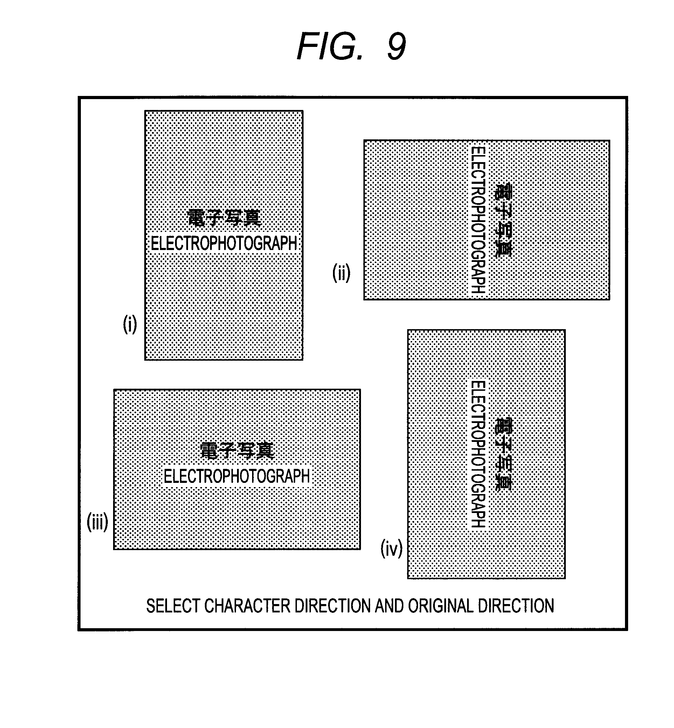

In S801, the CPU (206) instructs the operating unit interface (201) to display a UI display screen. An example of the UI display screen is illustrated in FIG. 9. The user selects a desired character direction and a desired original direction from samples (i) to (iv) displayed on the UI display screen (S802).

In S803, which one of the samples in FIG. 9 the user has selected is discriminated. If it is determined that the user selected the sample (i) or (iii), the CPU (206) sets "1" into the rotation flag in S804. This is because in the case where the character is located in the lateral direction for the reading direction of the scanner, that is, when the reading direction of the scanner coincides with the vertical direction of the character like a sample (i) or (iii), the number of lateral thin lines is large. If it is determined in S803 that the user selected the sample (ii) or (iv), the rotation flag is set to "0". After that, the processing routine advances to S304 in FIG. 3 and processes similar to those in the embodiment 1 are executed.

By the above embodiment, in the printed matter which is output by the recording apparatus (102) having the low subscan resolution, the deterioration in resolution of the character or diagram can be suppressed by the simple operation. Owing to the above construction, in the case of the Chinese character which needs the resolution of the horizontal lines, such a problem that the horizontal lines are broken or distinguished because of the low subscan resolution can be solved.

<Embodiment 3>

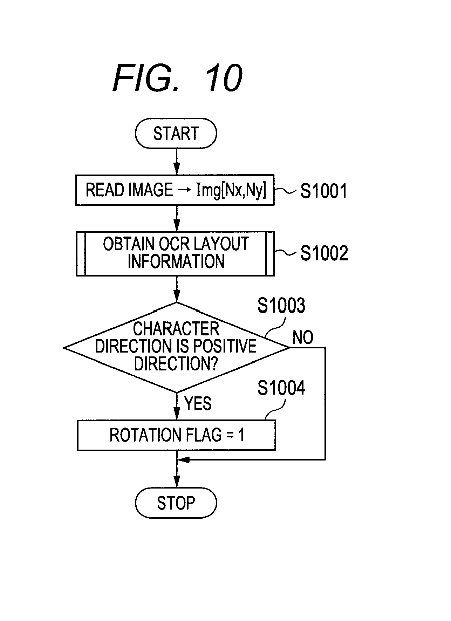

In an embodiment 3, in the character direction discriminating step of S303 in FIG. 3, an OCR processing program stored in the ROM (209) is used. The OCR processing program denotes a process and a program for recognizing a character of the digital image data. According to the OCR processing program, prior to recognizing the character, layout information and the vertical writing/lateral writing are discriminated and those information can be output to the outside. By using those information, the character direction discriminating step of S303 is executed. A flow for such a process is illustrated in FIG. 10. Since other processes are similar to those in the embodiment 1, their description is omitted.

In S1001, the CPU (206) reads the digital image data stored in the RAM (208) to the Img area. In S1002, the CPU (206) transfers the digital image data in the Img area to an OCR program stored in the ROM (209). The CPU (206) executes an arithmetic operating process to the digital image data in accordance with the OCR program and forms layout information. A forming method of the layout information is based on the OCR program and is not described in the embodiment. The character direction is included in the OCR layout information and it is obtained.

In S1003, the rotation flag is set by using a discrimination result of the character direction. When the character direction is a positive direction, that is, when the vertical direction of the digital image data coincides with the vertical direction of the character, "1" is set into the rotation flag in S1004. This is because when the character direction is the positive direction, it is considered that the number of horizontal lines is large. When the character direction is not the positive direction, the rotation flag is set to "0". After that, the processing routine advances to S304 in FIG. 3 and processes similar to those in the embodiment 1 are executed. It is also possible to construct in such a manner that only when it is determined by the OCR program that the character is a Chinese character, it can be determined that the original is a document including Chinese characters, so that the rotation as a main subject of the invention is not performed.

By executing the foregoing invention, in the printed matter which is output by the recording apparatus (102) having the low subscan resolution, the deterioration in resolution of the character can be suppressed by using the OCR process. Owing to the foregoing construction, in the case of the Chinese character which needs the resolution of the horizontal lines, such a problem that the horizontal lines are broken or distinguished because of the low subscan resolution can be solved.

<Embodiment 4>

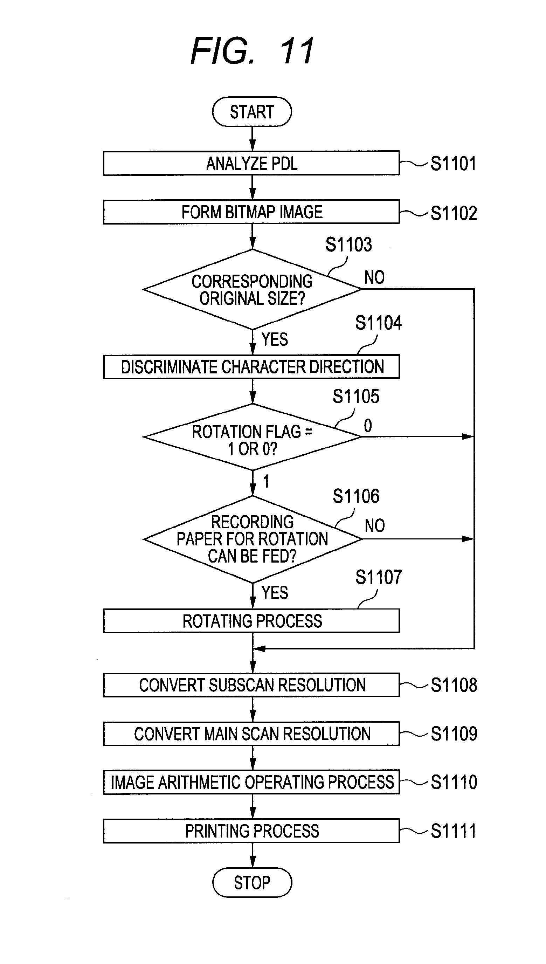

In an embodiment 4, the PC printing operation which is instructed from an external personal computer (PC; not shown) will be described with reference to FIG. 11.

In the case of executing the PC printing, the MFP receives a PDL (page description language) serving as a source of the digital image data and print conditions from the LAN-I/F (212) or USB-I/F (211) serving as an interface connected to the PC. The RAM (208) temporarily stores the received PDL and header information.

In S1101, the CPU (206) analyzes the PDL and header information. Information such as characters, diagram, photograph, and the like and their layout are described in the information which is analyzed and they are sequentially interpreted. In S1102, the CPU (206) forms digital image data from an analysis result of the PDL mentioned above and stored into the RAM (208). The above processes relate to an example of the executing method of the PC printing and the embodiment does not limit the PC printing. Therefore, there is also a case where the order is replaced or a case where the above processes are executed by the PC.

Subsequently, in S1103, the CPU (206) discriminates whether or not the size of original which is printed by the PC printing described in the PDL is the original size with which the embodiment can cope. If it is the corresponding original size, S1104 follows.

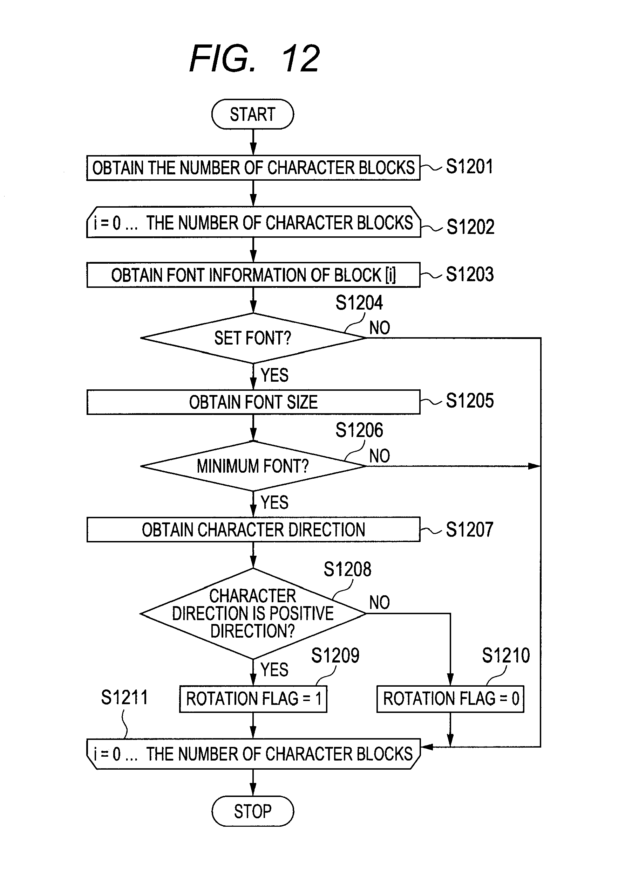

In S1104, the CPU (206) discriminates the character direction. In this case, the character direction discrimination is made by using the information of the PDL analyzed in S1101. A font, a size, and a direction of the character in the page are written in the analyzed PDL information. The process of S1104 will be described in detail with reference to a flowchart of FIG. 12.

In S1201, the CPU (206) obtains the number of character blocks of the print page from the analyzed PDL information stored in the RAM (208). This process is executed to obtain the number of times of a processing loop starting from S1202 and is necessary in order to search for all character blocks in the page.

Subsequently, in S1203, the CPU (206) obtains font information of the target block. The font information indicates a type, a size, and a direction of the font.

In S1204, the CPU (206) branches the conditions in accordance with the font type. For example, when the font type indicates a Chinese character font, since it is presumed that high frequency lines are included, it is used as a set font and the processing routine advances to S1205. When the font type indicates an English character font, since the high frequency lines are not included in many cases, the processing routine advances to S1211 and the next character block is inspected.

Subsequently, in S1205, the CPU (206) obtains the font size. The smaller the font size is, the higher (thinner) the frequency of the printed character is. Therefore, in S1206, whether or not the minimum font size is included in the target block is discriminated.

If the minimum font size is included, in S1207, the CPU (206) confirms the character direction and selects either the rotation or the non-rotation in S1208 to S1210.

Since processes from S1105 are similar to processes from S305 in FIG. 3, their description is omitted.

By the foregoing embodiment, in the printed matter which is output by the recording apparatus (102) having the low subscan resolution, the deterioration in resolution of the character or diagram can be controlled by the simple operation. Owing to the foregoing construction, in the case of the Chinese character which needs the resolution of the horizontal lines, such a problem that the horizontal lines are broken or distinguished because of the low subscan resolution solved.

<Embodiment 5>

In an embodiment 5, the operation in the case of a plural page process will now be described with reference to a flowchart of FIG. 3. The recent MFP often has a multipage processing function. The multipage processing function is a duplex printing for printing images onto front and back surfaces of the recording media or a function for printing a plurality of images into one page of the recording media (N-up function). When the duplex printing or N-up printing is set by an instruction from the foregoing operation panel 107, the following processes are executed.

S1301 to S1303 relate to a loop process for reading a plurality of originals by using the sheet original reading function which the original reading apparatus (101) has. Each page is stored as digital image data into the RAM (208) from the scanner I/F (202). In this case, since it is necessary that the directions of the originals are aligned, it is necessary to unconditionally decide a printing direction for a plurality of originals.

In S1304, the CPU (206) discriminates whether or not a size of each original read in S1301 to S1303 coincides with the corresponding original size. If at least one original whose size differs from the corresponding original size is included among the read original sheets, the invention is not used. Therefore, the processing routine advances to S1313.

In S1305 to S1309, the CPU (206) discriminates the character direction of each page (S1306) and executes the count-up of the rotation flag (S1308). Since the discrimination about the character direction (S1306) has already been described in detail in the embodiments 1, 2, and 3, its description is omitted here.

Since a 2-up image is rotated from a 1-up image by 90 degrees, the character direction discrimination is performed for the 2-up image with rotation of 90 degrees with respect to the 1-up image.

In S1310, the count value which has been counted up in S1308 is compared with a constant A. As a deciding method of the constant A, for example, it is set to a value which is equal to the half of the number of original sheets scanned in S1302. In this case, if it is determined in the character direction discrimination in S1306 that the pages of the half number or more should be rotated, the rotating process in S1312 is executed. The constant A is not limited but may be freely set to an arbitrary value by an operating unit of the MFP using the embodiment.

Since processes after S1311 are similar to processes after S305, their description is omitted here. In S1316, the duplex printing or N-up printing is executed in accordance with the instruction from the operation panel 107.

By the foregoing embodiment, in the printed matter which is output by the recording apparatus (102) having the low subscan resolution, the deterioration in resolution of the character or diagram can be controlled by the simple operation. Owing to the foregoing construction, in the case of the Chinese character which needs the resolution of the horizontal lines, such a problem that the horizontal lines are broken or distinguished because of the low subscan resolution solved.

According to the foregoing embodiment, in the printed matter which is output by the recording apparatus having the low subscan resolution, the deterioration in resolution of the character or diagram can be suppressed.

<Other embodiments>

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium). In such a case, the system or apparatus, the program, and the recording medium where the program is stored, are included as being within the scope of the present invention.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
The following statements form part of the description. The claims follow these statements and are labeled as such.
1. An image-processing apparatus for controlling a recording apparatus which has different main scan and sub-scan printing resolutions, comprising:
   reception means for receiving image data for printing, which image data has a horizontal resolution and a vertical resolution;
   character-direction discriminating means (203) configured to discriminate an orientation of a character included in the received image data;
   image-rotating means (205) configured to select an orientation in which the image data will be printed relative to the main-scan and sub-scan directions of the recording apparatus;
   reduction means for reducing at least one of the horizontal and vertical resolutions of the received image data for printing; and
   output means for outputting the reduced image data to the recording apparatus for printing;
   wherein the image-rotating means (205) is configured to select the orientation in which the image data will be printed relative to the main-scan and sub-scan directions in order to mitigate deterioration of the character by the reduction means.
2. An image-processing apparatus according to statement 1, wherein, in a case that the character included in the image data belongs to a character set typified by characters having many thin lines extending in a certain direction, the image-rotating means (205) is configured to select an orientation of the image data so that the resolution reduction or the greater of the horizontal and vertical resolution reductions occurs in the dimension parallel with the direction of the thin lines.
3. An image-processing apparatus according to statement 1 or statement 2, wherein the character-direction discriminating means (203) is configured to discriminate the orientation of the character using at least one band pass filter.
4. An image-processing apparatus according to statement 1 or statement 2, wherein the character-direction discriminating means (203) is configured to discriminate the orientation of the character by comparing the number of vertical thin lines and the number of lateral thin lines.
5. An image-processing apparatus according to statement 1 or statement 2, wherein the character-direction discriminating means (203) is configured to discriminate the character orientation in accordance with an input from a user interface (Fig. 9).
6. An image-processing apparatus according to statement 1 or statement 2, wherein the character-direction discriminating means (203) discriminates the character orientation using a result of an OCR process.
7. An image-processing apparatus according to statement 1 or statement 2, wherein the image data is page description language data received from an external computer and the character-direction discriminating means (203) is configured to discriminate the character orientation by analysing the page description language.
8. An image-processing apparatus according to any preceding statement configured to receive settings to perform duplex and/or N-up printing, wherein the image-rotating means (205) is configured to determine a common orientation in which the image data will be printed for a plurality of logical pages of received image data in a case that settings to perform duplex and/ore N-up printing are received.
9. An image-processing method for controlling a recording apparatus which has different main scan and sub-scan printing resolutions, comprising:
   receiving image data for printing, which image data has a horizontal resolution and a vertical resolution;
   discriminating (S303) an orientation of a character included in the received image data;
   selecting (S304) an orientation in which the image data will be printed relative to the main-scan and sub-scan directions of the recording apparatus;
   reducing (S307, S308) at least one of the horizontal and vertical resolutions of the received image data for printing; and
   outputting (S310) the reduced image data to the recording apparatus for printing;
   wherein the orientation in which the image data will be printed relative to the main-scan and sub-scan directions is selected in order to mitigate deterioration of the character by the reduction means.
10. A program that, when executed by an image-processing apparatus, causes the image processing apparatus to perform a method according to statement 9.
11. A storage medium storing a program according to statement 10.

## Claims

1. An image processing apparatus for controlling a recording apparatus which has a subscan resolution lower than a main scan resolution, comprising:
character direction discriminating means for discriminating a direction of a character included in image data;
image rotating means for rotating the image data so that a horizontal line in the character determined by the character direction discriminating means is scanned by the main scan of the recording apparatus; and
control means for allowing the recording apparatus to record the image data rotated by the image rotating means.

2. The image processing apparatus according to claim 1, wherein the character direction discriminating means discriminates the character direction by comparing a feature amount of the main scan and a feature amount of the subscan.

3. The image processing apparatus according to claim 1, wherein the character direction discriminating means discriminates the character direction by comparing the number of vertical thin lines and the number of lateral thin lines.

4. The image processing apparatus according to claim 1, wherein the character direction discriminating means discriminates the character direction in accordance with an input from a user interface.

5. The image processing apparatus according to claim 1, wherein the character direction discriminating means discriminates the character direction by using a result of an OCR process.

6. The image processing apparatus according to claim 1, wherein a page description language serving as a source of the image data is input from an external computer and the character direction discriminating means discriminates the character direction by an analysis result of the page description language.

7. The image processing apparatus according to claim 1, further comprising operating means for instructing a duplex printing or an N-up printing.

8. An image processing method for controlling a recording apparatus which has a subscan resolution lower than a main scan resolution, comprising:
discriminating a direction of a character included in image data;
rotating the image data so that a horizontal line in the character determined in the character direction discriminating is scanned by the main scan of the recording apparatus; and
allowing the recording apparatus to record the image data rotated in the rotating.

9. A program that, when executed by an image-processing apparatus, causes the image processing apparatus to perform a method according to claim 8.

10. A storage medium storing a program according to claim 9.

11. An image-processing apparatus for controlling a recording apparatus which has different main scan and sub-scan printing resolutions, comprising:
reception means for receiving image data for printing, which image data has a horizontal resolution and a vertical resolution;
character-direction discriminating means (203) for discriminating an orientation of a character included in the received image data;
image-rotating means (205) for selecting an orientation in which the image data will be printed relative to the main-scan and sub-scan directions of the recording apparatus;
reduction means for reducing at least one of the horizontal and vertical resolutions of the received image data for printing; and
output means for outputting the reduced image data to the recording apparatus for printing;
wherein the image-rotating means (205) is configured to select the orientation in which the image data will be printed relative to the main-scan and sub-scan directions in order to mitigate deterioration of the character by the reduction means.
